# FASCICULE DE BREVET EUROPEEN

(11) **EP 3 391 633 B1**
(45) Date de publication et mention de la délivrance du brevet: **18.11.2020**
(21) Numéro de dépôt: 16808716.1
(22) Date de dépôt: 13.12.2016
(51) Int. Cl.: H04M 1/727

(54) **PROCEDE DE RE-INDEXATION D'UN TERMINAL DANS UNE PASSERELLE DE COMMUNICATION**
VERFAHREN ZUR ERNEUTEN INDEXIERUNG EINES ENDGERÄTS IN EINEM KOMMUNIKATIONSGATEWAY
METHOD FOR RE-INDEXING A TERMINAL IN A COMMUNICATION GATEWAY

(30) Priorité: 14.12.2015 FR 1562327
(43) Date de publication de la demande: 24.10.2018
(73) Titulaire: Sagemcom Broadband SAS, 92500 Rueil-Malmaison (FR)
(72) Inventeur: NOUCHET, Gaëtan, 92500 Rueil Malmaison (FR); JAULIN, Jean-Philippe, 92500 Rueil Malmaison (FR)
(74) Mandataire: Cabinet Camus Lebkiri
(86) Numéro de dépôt international: PCT/EP2016/080718
(87) Numéro de publication internationale: WO 2017/102679

(56) Documents cités:
- DE-A1- 19 740 934
- US-A1- 2010 273 453
- US-A1- 2010 311 408

## Description

### DOMAINE

Le domaine de l'invention concerne celui de l'indexation de terminaux référencés dans une passerelle de communication, la passerelle assurant l'accès à une pluralité de lignes téléphoniques et le routage des communications. Plus particulièrement, le domaine de l'invention concerne les terminaux mobiles destinés à être rechargés sur un socle fixe et dont l'indexation aux lignes est effectuée par une base ou la passerelle. Le champ d'application de l'invention se rapporte aux procédés d'indexation des terminaux à un contexte de routage et à leur ré-indexation lorsqu'une modification de leur usage est détectée.

### ETAT DE L'ART

La norme DECT, désignant dans la terminologie anglo-saxonne « Digital Enhanced Cordless Telephone », définit les principaux services pour la mise en œuvre de communications pour des terminaux domestiques ou professionnels rattachés à une station base ou une passerelle. Lorsqu'ils sont des terminaux mobiles, ils sont généralement associés à un socle. Les produits sont donc constitués d'une station de base et d'un ou plusieurs terminaux fixes ou mobiles plus communément nommés « combinés ».

Les normes ETSI EN 300 175 parties 1 à 8 et ETSI EN 300 444 décrivent comment les identifiants des combinés sont distribués, ces derniers permettant de diriger les appels et autres messages entrants et sortants.

Il est donc connu, actuellement, un principe d'allocation de numéros à des terminaux lors de leur association à une station de base.

Actuellement, parmi les solutions connues, le routage des appels est défini de façon statique au sein d'une passerelle. L'utilisateur peut associer, pour chaque terminal, représenté par son identifiant, une liste de lignes pour les appels entrant, ainsi qu'une ligne par défaut pour les appels sortant.

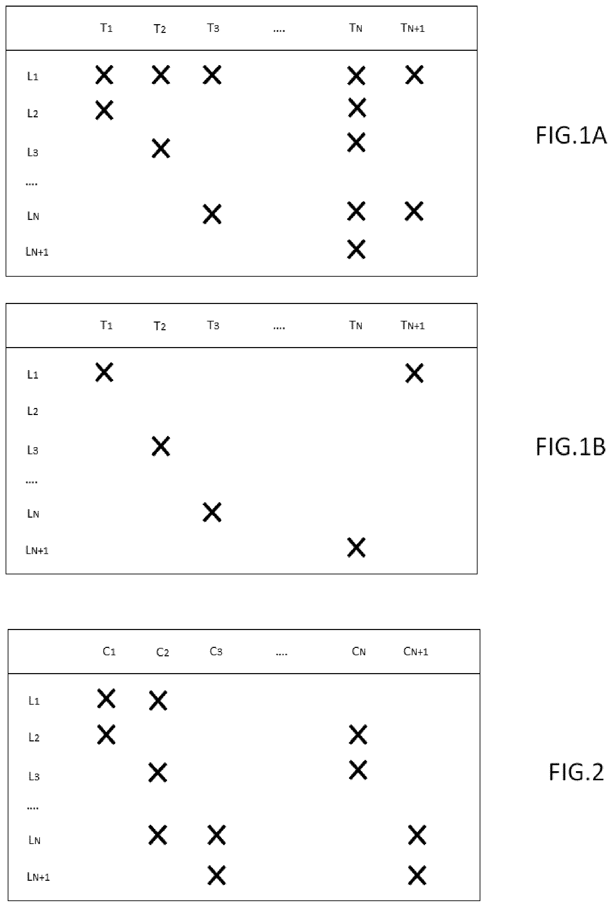

La figure 1A représente un exemple d'affectation de lignes pour les appels entrants à un ensemble de terminaux connus d'une passerelle. Les croix représentent ces affectations. Par exemple, deux lignes sont affectées L₁, L_{N} au terminal T₃ pour les appels entrants. Selon un autre exemple, le terminal T_{N} peut recevoir l'ensemble des appels entrants car toutes les lignes lui sont affectées pour les appels entrants. On note également qu'un appel sur la ligne L₁ fera sonner l'ensemble des combinés T₁ à _{TN+1}.

La figure 1B représente une affectation d'un ensemble de terminaux à une pluralité de lignes pour configurer des appels sortant. A la lecture de la figure 1B, on comprend que, par exemple, le terminal T₂ est affecté à la ligne L₃ pour les appels sortants du terminal T₂. Dans cet exemple, un numéro composé sur les terminaux T₁ ou T_{N+1} déclenchera un appel au travers de la ligne L₁.

Un problème se pose lorsqu'un terminal est physiquement déplacé et est, par exemple, replacé dans un autre socle que son socle initial. Ce cas de figure peut se produire lorsqu'une flotte de terminaux est utilisée dans un cadre professionnel dans des bâtiments dans lesquels les utilisateurs sont amenés à se déplacer chacun avec leur propre terminal mobile.

Lorsqu'une telle opération se produit, une étape de reconfiguration manuelle est effectuée auprès de la station de base pour réaffecter une configuration de routage audit terminal. Dans le cas contraire, l'utilisateur doit retrouver son terminal.

Or, une reconfiguration de la station de base nécessite d'utiliser l'interface de configuration de la passerelle. Or cette dernière est généralement difficile d'accès et n'est pas accessible à tous les utilisateurs. Par ailleurs, un utilisateur non averti doit généralement faire appel à un technicien ou une assistance pour reconfigurer la passerelle lorsqu'un terminal est réaffecté à une autre base.

Enfin, pour chaque terminal ayant changé d'affectation il faut donc retirer ces anciennes associations pour ajouter les nouvelles. La reconfiguration d'une telle passerelle est difficile à mettre en œuvre lors d'un déploiement d'un grand nombre de terminaux alors que les réaffectations sont courantes et de plus en plus fréquentes compte tenu de la mobilité accrue des utilisateurs. Les documents DE 197 40 934 A1, US 2010/0311408 A1 et US 2010/0273453 A1 décrivent l'état de la technique.

### RESUME DE L'INVENTION

L'invention est définie dans les revendications 1 à 11 et permet de résoudre les inconvénients précités.

Un objet de l'invention concerne un procédé de ré-indexation dans une station de base d'au moins un premier terminal mobile devant être associé à une nouvelle configuration de routage prédéfinie, la station de base répertoriant un premier ensemble d'identifiants de terminaux mobiles et un ensemble d'identifiants de contextes, chaque identifiant de contexte étant associé à une affectation de lignes correspondante à une configuration de routage de communications entrantes et sortantes, ledit procédé comprenant :
▪ Une détection d'une demande de changement d'identifiant de terminal émise par le premier terminal, ladite demande comprenant une information correspondante à un identifiant de contexte répertorié dans la station de base ;
▪ Une vérification de la disponibilité d'un nouvel l'identifiant de terminal associé à l'identifiant de contexte, ledit identifiant de contexte étant déterminé par l'analyse de l'information de contexte comprise dans la demande ;
▪ Une attribution d'un nouvel identifiant de terminal audit premier terminal comprenant ;
   ∘ Une transmission du nouvel identifiant de terminal audit premier terminal ;
   ∘ Une modification de l'indexation du nouvel identifiant du terminal stocké dans la station de base.

Selon un mode de réalisation, le procédé de ré-indexation comprend préalablement:
▪ Une génération d'un évènement déclencheur entrainant l'émission par le premier terminal d'une demande de changement d'identifiant d'un terminal auprès de la station de base, l'événement déclencheur étant causé par la détection d'une modification de contexte du premier terminal.

Selon un mode de réalisation, la base comporte une mémoire dans laquelle sont stockées un ensemble de configurations de routages particulières et au moins une configuration de routage par défaut.

Selon un mode de réalisation, le procédé comprend, lorsque l'étape de vérification de disponibilité d'un nouvel identifiant de terminal échoue, une étape de :
▪ Génération d'une requête de modification de l'identification de terminal à destination d'un second terminal comportant l'identification de terminal correspondant à l'identification de contexte souhaitée;
▪ Attribution d'un second identifiant de terminal au second terminal, ledit second identifiant de terminal étant affectée à une configuration de routage par défaut.

Selon un mode de réalisation, le procédé de ré-indexation comprend une émission d'un message par la station de base au premier terminal l'invitant à réémettre une nouvelle demande de changement d'identifiant de terminal après l'écoulement d'un premier laps de temps.

Selon un mode de réalisation, le procédé de ré-indexation comprend lorsque l'étape de vérification de disponibilité d'un nouvel identifiant de terminal échoue, une étape de :
▪ Génération d'une requête de modification de l'identification de terminal à destination d'un second terminal comportant l'identification de terminal correspondant à l'identification de contexte souhaitée ;
▪ Déclenchement d'une seconde temporisation pendant laquelle une réponse du second terminal est attendue par la station de base ;
▪ Suppression de l'identification de terminal d'un second terminal comportant l'identification de terminal correspondant à l'identification de contexte souhaitée dans une table d'indexation de la station de base après l'écoulement de la seconde temporisation.

Selon un mode de réalisation, l'information de contexte est l'un parmi la liste des informations suivantes :
▪ Un identifiant de socle, lorsque l'évènement déclencheur correspond à une connexion du premier terminal sur un autre socle que le socle auquel il a été initialement associé ;
▪ Un identifiant d'utilisateur ou un code associé à un compte utilisateur, lorsque l'événement déclencheur est la saisie d'un code sur une interface du premier terminal ou la reconnaissance d'une empreinte ;
▪ Un identifiant de localisation, lorsque l'événement déclencheur est une association du premier terminal à un lieu prédéfini et connu de la station de base.

Un autre objet de l'invention concerne un produit programme d'ordinateur comportant un calculateur et une mémoire comportant une suite d'instructions qui, lorsque le programme est exécuté par un ordinateur, conduisent celui-ci à mettre en œuvre du procédé de l'invention. Les instructions du produit programme d'ordinateur peuvent être exécutés sur un calculateur tel qu'un microprocesseur ou un microcontrôleur. Une mémoire permet de stocker les données à enregistrées telles que celles de la base de données comprenant les identifiants ou les numéros de lignes et les attributions et les ré-indexations.

Un autre aspect de l'invention concerne un support d'enregistrement lisible par un ordinateur, sur lequel est enregistré le produit programme d'ordinateur selon l'invention. Cet aspect de l'invention concerne en particulier un support d'enregistrement lisible par un terminal ou une station de base, sur lequel est enregistré le produit programme d'ordinateur selon l'invention.

Un autre objet de l'invention concerne une station de base comprenant des moyens de calculs des interfaces de communications permettant de recevoir et émettre des appels entrant, une interface radio permettant d'émettre et recevoir des messages à une flotte de terminaux référencés dans une mémoire, ladite mémoire stockant des données référençant:
▪ des identifiants de terminaux mobiles associés à des identifiants de contextes ;
▪ des identifiants de lignes permettant de définir des configurations de routage lorsqu'ils sont associés à des terminaux,
ladite station de base comprenant une table de configurations de routage des appels entrants et sortants associant chaque identifiant de contexte avec une configuration de routage prédéfinie, la station de base comprenant, en outre, une fonction permettant de détecter une demande de changement d'identifiant de terminal en provenance d'un terminal, une détermination d'une information de contexte comprise dans ladite demande permettant d'identifier un nouvel identifiant de terminal associé à un identifiant de contexte correspondant à l'information extraite du message reçu, et une attribution du nouvel identifiant de terminal audit terminal ayant effectué la demande de changement.

La station de base comprend les moyens pour mettre en œuvre les étapes ci-après décrites du procédé de l'invention qui sont exécutées par ladite station de base.

Un autre objet de l'invention concerne un terminal comprenant une adresse physique immuable et une interface permettant de déterminer un élément de contexte relatif à une nouvelle utilisation dudit terminal, des moyens de calculs permettant de générer un message à destination d'une station de base émis par voie radio, ledit message comprenant :
▪ une information identifiant l'élément de contexte précédemment déterminé et ;
▪ une demande d'attribution d'un nouvel identifiant de terminal à associer à son adresse physique immuable,

Le terminal est capable consécutivement à la transmission du message de recevoir un nouvel identifiant de terminal et de modifier dans sa mémoire son précédent identifiant de terminal par un nouvel identifiant de terminal reçu de la station de base.

Le terminal comprend les moyens pour mettre en œuvre les étapes ci-après décrites du procédé de l'invention qui sont exécutées par ledit terminal.

### BREVE DESCRIPTION DES FIGURES

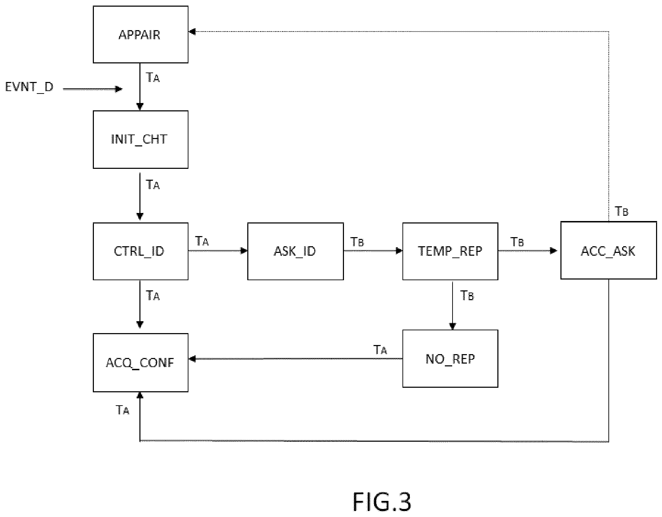

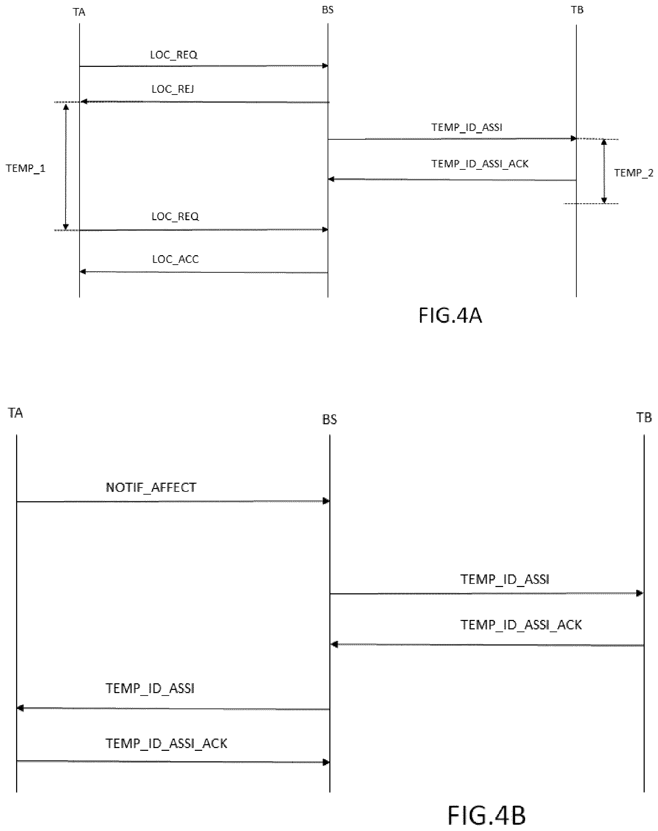

D'autres caractéristiques et avantages de l'invention ressortiront à la lecture de la description détaillée qui suit, en référence aux figures annexées, qui illustrent :
▪ figure 1A : une affectation de lignes auprès d'un ensemble de terminaux pour des appels entrants au moyen d'une passerelle de l'art antérieur;
▪ figure 1B: une affectation de lignes auprès d'un ensemble de terminaux pour des appels sortants au moyen d'une passerelle de l'art antérieur;
▪ figure 2 : une affectation de lignes auprès d'un ensemble de profils selon le procédé de l'invention pour des appels entrants et/ou sortants ;
▪ figure 3 : les principales étapes du procédé de l'invention ;
▪ figure 4A : un premier mode de réalisation d'une séquence d'émission et de réception de données entrainant une ré-indexation d'un terminal auprès d'une station de base selon le procédé de l'invention ;
▪ figure 4B : un second mode de réalisation d'une séquence d'émission et de réception de données entrainant une ré-indexation d'un terminal auprès d'une station de base selon le procédé de l'invention.

### DESCRIPTION

Dans la suite de la description, différents modes de réalisation de l'invention sont détaillés. Le procédé de l'invention peut être entendu comme un procédé de ré-indexation d'un terminal dans une station de base dans la mesure où un nouvel identifiant est attribué à ce terminal sous certaines conditions. Le procédé de l'invention peut également être entendu comme un procédé de réaffectation d'une configuration de routage d'un terminal dans la mesure où le changement d'identifiant a pour conséquence un changement de configuration de routage.

### Définitions

### - Station de Base

Dans la suite la suite de description, une base ou une station de base est un équipement de communication permettant de réaliser d'une part l'interface radio avec une pluralité de terminaux et d'autre part des interfaces de communications avec un ensemble de lignes téléphoniques. Une base est également une passerelle de communication également connue sous la terminologie anglo-saxonne de « Gateway ». Une base DECT est un exemple de station de base de l'invention. On parlera indifféremment de station de base ou de base dans la présente description de l'invention.

Une base comprend au moins un calculateur et une mémoire et un ensemble d'interfaces externes permettant d'administrer des lignes téléphoniques pour des appels sortant et entrants. En outre, une base comprend une ou plusieurs interface(s) interne(s) pour recevoir et émettre des signaux vers des terminaux. L'interface interne peut être une interface radio, Ethernet ou un autre type d'interface filaire ou sans fil. Selon différents modes de réalisation, une base peut comprendre une combinaison d'interfaces internes et externes répondant à différentes normes ou protocoles autorisant des configurations permettant d'administrer une pluralité de terminaux ayant des liaisons de différentes natures, telles que des liaisons de données ou de voix.

### - Terminal

Un terminal est un équipement comprenant des moyens pour établir une communication avec un autre équipement. Il comprend donc nécessairement une interface de communication. L'invention se rapporte plus particulièrement à des terminaux sans fil ayant une interface radio leur permettant d'établir une liaison avec une station de base BS notamment pour établir des communications avec d'autres terminaux.

Les communications peuvent être établies :
▪ entre des terminaux connus de la station de base BS, ce qui permet d'établir des communications dans un réseau interne.
▪ entre un terminal connu de la station de basse BS et un terminal externe non référencé dans la station de base, les communications établies étant alors réalisées au-delà d'un réseau interne ou entre différents réseaux internes connectés par différentes stations de base.

La station de base BS joue donc un rôle de passerelle pour établir des appels entrants et des appels sortants entre une flotte de terminaux connus de la station de base BS et des terminaux extérieurs ou non connus de la station de base en question.

Un terminal comprend une adresse physique, également appelée adresse MAC. Cette adresse peut également correspondre à une adresse IPEI dans le cas de la norme DECT. On considère que cette adresse est une adresse immuable au sens qu'elle ne changera jamais tout au long de son utilisation. En outre, un terminal comprend un identifiant noté TPUI permettant de définir des associations de routages avec des lignes téléphoniques dans la station de base. Le TPUI est attribué à un terminal notamment lors d'une opération nommée appairage, c'est-à-dire lors de sa première connexion à une station de base BS. Une première configuration de la station de base BS permet de définir des règles de routage d'un parc de terminaux auxquels ont été attribués des identifiants de terminaux TPUI. Plus généralement, le TPUI est attribué consécutivement à une requête « LOCATE REQUEST » qui est générée à chaque fois qu'un terminal découvre une station de base, soit simultanément à une opération d'appairage, soit lorsqu'il entre dans une zone de couverture d'une station de base.

### - Règles de routage

Une station de base BS comprend un ensemble de données stockées dans une mémoire définissant des règles de routages. Les règles de routages définissent les associations entre les lignes et les TPUI des terminaux pour les appels entrants et sortants.

Selon un mode de réalisation, le routage permet d'associer des numéros de lignes logiques à des terminaux logiques. Toutefois, les règles de routage permettent de router des communications numériques ou analogiques. Lorsque les communications sont numériques, différents protocoles peuvent être supportés tels que le protocole IP par la station de base BS. Par exemple, des communications vocales sur IP peuvent être routées logiquement par une table de routage numérique.

Les règles de routages permettent de générer des consignes de sonneries, par exemple, d'un certain nombre de terminaux associés à un numéro de ligne dont un appel entrant a été détecté par la station de base BS.

### - Socle

Un socle est un équipement permettant notamment de charger un terminal. Un socle permet généralement de convertir une alimentation principale en une alimentation dédiée au terminal. En outre, un socle de l'invention comprend un support pour maintenir le terminal lorsque ce dernier est connecté à un socle. Le socle et le terminal sont donc capables d'échanger des signaux électriques soit pour alimenter le terminal soit pour dialoguer. Selon un mode de réalisation de l'invention, un socle et un terminal sont capables d'échanger des identifiants ou des données relatives à leur identité au moyen des signaux générés transitant par les interfaces de connexion de ces équipements. L'identifiant d'un socle est noté IDS dans la suite de la description.

### Identifiant de Contexte

La figure 2 représente un schéma d'affectation de lignes à des identifiants de contexte {Cᵢ}_{i∈[1,N]} et plus généralement IDC quand on évoque un identifiant de contexte. Dans l'exemple de la figure 2, l'identifiant de contexte Ci est lié à une fonction d'un utilisateur Ui. Dans ce cas d'exemple l'identifiant de contexte IC peut être un identifiant d'une fonction d'un utilisateur.

Selon différents exemples, un contexte peut être défini par une fonction dans une entreprise, un métier, un lieu tel qu'un étage d'un immeuble ou encore une adresse, un utilisateur ou tout autre élément définissant un contexte.

Selon un exemple, C₁ représente un poste par défaut, C₂ représente un poste de secrétaire, C₃ représente un poste de directeur, C_{N} représente un poste de laboratoire et C_{N+1} représente un poste rattaché au bureau du directeur.

Il existe donc des configurations de routage par défaut et des configurations de routages particulières.

Les identifiants de contextes sont associés à une configuration de routage, les contextes sont donc définis de manière unique pour éviter les erreurs d'affectation.

Un avantage des identifiants de contexte est qu'ils ne sont plus nécessairement rattachés chacun à un équipement nominatif attribué à un utilisateur prédéfini.

### Synchronisation d'un terminal, Appairage

Lorsqu'un terminal est synchronisé avec la base ou la passerelle un identifiant noté TPUI est attribué par la base au terminal. Une procédure d'appairage permet d'enregistrer et de configurer une première attribution d'un identifiant TPUI à un terminal auprès d'une station de base. Cette procédure est effectuée préalablement au procédé de l'invention.

Lorsque le base attribue un identifiant TPUI à un terminal, la base peut alors être configurée selon des règles de routage afin d'affecter au terminal un ensemble de lignes affectées pour les appels entrants et sortants.

### Découverte d'une base

Lorsqu'un terminal est allumé et synchronisé avec sa station de base, il est capable de transmettre des données à sa station de base BS dans son environnement proche, par exemple par voie radio. A cet effet, il est capable de transmettre des signaux comprenant son identifiant de terminal TPUI. Selon un mode de réalisation, le terminal est capable de transmettre des données supplémentaires relatives à son environnement, telles qu'un niveau de charge, un identifiant du socle auquel il est connecté ou encore le dernier identifiant de socle auquel il a été connecté.

### Evènement déclencheur

Selon un mode de réalisation, l'événement déclencheur est la détection d'un contact entre un terminal et un socle donné. Dans ce mode de réalisation, l'événement est généré consécutivement à la connexion d'un terminal sur un socle donné qui n'est pas le socle de référence du terminal qui lui a été associé à l'origine. Le terminal et le socle échangent par le biais d'un connecteur des signaux électriques.

Selon une première variante de réalisation, le socle est un équipement intelligent. Un signal transmis par le terminal au socle comporte l'identifiant du terminal TPUI. Dans ce cas, le socle est alors configuré pour communiquer à la station de base BS l'identifiant du terminal TPUI reçu par exemple au moyen d'une liaison radio ou filaire.

Selon une seconde variante de réalisation, le terminal émet des messages comportant des informations de contexte à la station de base. Un signal transmis par le socle au terminal comporte un identifiant du socle IDS. Cet identifiant IDS est alors transmis à la station de base BS par voie radio à partir du terminal. L'identifiant du socle IDS ou une information équivalente identifiant le socle permet à la station de base BS de déterminer un identifiant de contexte associé. Dans ce cas, on considère que l'identifiant de socle IDS est une information de contexte qui est dans ce cas le changement d'identifiant de socle IDS auquel le terminal s'est connecté. L'identifiant de socle peut être associé à une fonction telle que définie à la figure 2.

Dans les deux variantes, la station de base BS est configurée pour recevoir soit des signaux d'un socle, soit des signaux d'un terminal. L'identifiant du terminal TPUI émis par le socle et/ou l'identifiant du socle IDS émis par le terminal à destination de la station de base BS.

Lorsque le terminal est intelligent, il communique le changement s'association socle-terminal à la base. Lorsque le terminal n'est pas intelligent, il communique un identifiant de socle à la station de base BS. C'est alors la station de base BS qui est configurée pour initier une comparaison avec une association déjà connue entre le terminal et le socle. Lorsqu'une modification de l'association terminal-socle est détectée, une modification d'indexation de l'identifiant du terminal TPUI à un nouveau contexte de communication est engagé.

Plus généralement, les évènements déclencheurs peuvent être de deux types : un évènement automatiquement généré en fonction d'un contexte public ou un évènement manuel déclenché par l'action d'un utilisateur qui définit un contexte privé. Selon le dernier mode de réalisation, un contexte peut comprendre des caractéristiques d'un contexte privé et d'un contexte public.

Un événement automatique est causé par un changement de contexte public. Il peut être, par exemple, une détection du socle de chargement utilisé (communication, angle d'inclinaison, ...) comme détaillé précédemment. Selon d'autres exemples, l'évènement déclencheur peut être une détection de la localisation du terminal ou encore une reconnaissance automatique d'un utilisateur par des traits de caractéristiques tels qu'une empreinte, un visage ou une voix.

La détection du changement de contextes peut être préférentiellement transmise par le terminal à la station de base BS. Dans ce dernier cas, le terminal envoie un message de notification à la station de base BS tel qu'un message IWU-TO-IWU, dont le message est définit dans la norme ETSI définissant les protocoles d'échanges des messages DECT. Ce dernier message est capable d'être généré de sorte à comprendre une information de contexte.

Selon un mode de réalisation, lorsque le terminal comprend des données décrivant les affectations de chaque TPUI, il peut directement demander à la base le TPUI désiré. Cette demande peut être réalisée au moyen de la génération d'une requête adressée à la station de base par voie radio.

Selon un autre mode de réalisation, la détection de changement de contexte peut être réalisée par un autre composant que le terminal en question. Par exemple, lorsque le socle est muni de moyen de transmission la demande de changement d'identifiant TPUI peut émaner de cet équipement. D'autres équipements connectés à la base peuvent éventuellement faire remonter des éléments de contextes engageant une réaffectation d'un TPUI à un terminal.

Un évènement manuel peut être engagé par un utilisateur directement par l'intermédiaire de l'interface graphique de la passerelle ou l'interface d'un terminal. Cet évènement permet de définir un contexte privé. L'utilisateur peut s'identifier ou identifier un lieu. Cette identification, protégée ou non par mot de passe (code pin ou autre) peut être réalisée depuis un terminal en composant une combinaison de tonalités particulières, chiffres ou caractères. Dans ce cas, la station de base BS est informée du changement sans nécessiter à un opérateur d'accéder physiquement à la station de base BS ou au moyen d'un équipement d'administration dédié. Un changement d'affectation peut alors être engagé à partir d'un terminal.

Selon un autre mode de réalisation, l'événement déclencheur manuel est la détection et la transmission d'un code entré par un utilisateur dans une interface d'un terminal, tel qu'un code PIN. Ledit code est alors transmis par voie radio à la station de base BS. Dans ce cas de figure, la station de base BS est en mesure d'associer le code PIN reçu avec un identifiant de contexte IDC. L'identifiant de contexte IDC identifié par la station de base BS permet de vérifier si le TPUI associé à cet identifiant de contexte est immédiatement disponible ou non. Le procédé de l'invention permet de réattribuer ce nouvel identifiant de terminal TPUI au terminal ayant émis le message contenant le code PIN. Après attribution de ce nouvel identifiant de terminal, il est alors réindexé dans une mémoire de la station de base BS.

Selon un mode de réalisation, une information de contexte comprend deux données combinées comme par exemple : un identifiant de socle associé nouvellement à un terminal qui était précédent associé à un autre socle et un mot de passe tel qu'un code PIN. Il s'agit d'un contexte complexe définit par deux critères. Ce mode de réalisation évite, par exemple, qu'un tiers ne connecte simplement son terminal sur le socle d'une autre personne pour en hériter les règles de routage. Certains contextes peuvent donc comprendre l'identification d'un mot de passe transmis à la station de base BS combiné à un contexte public.

En conséquence, un identifiant de contexte IDC peut être assimilé à un identifiant de socle, un identifiant utilisateur, un identifiant de lieu ou encore un identifiant d'une fonction dès lors que la fonction est unique comme par exemple la fonction de dirigeant. Dans le cadre de la description des modes de réalisation de l'invention, on nomme ces différents identifiants un identifiant de contexte IDC.

### Affectation des TPUI

Selon un mode de réalisation, les affectations entre les identifiants de terminaux et les identifiants de lignes sont enregistrées dans une mémoire de la station de base BS, par exemple, dans une base de données. La base de données comprend, selon un mode de réalisation, une table comprenant les identifications des terminaux TPUI. Selon un exemple de réalisation, les TPUI sont définis sur 8 bits. Dans ce dernier cas, 255 appareils peuvent être indexés dans la table.

Selon un mode de réalisation, la base indexe un nombre N d'identifiants de terminaux TPUI ayant une affectation prédéfinie. L'attribution d'un TPUI peut être réalisée auprès d'un utilisateur en particulier, une fonction ou encore une localisation, etc., l'usage du terminal définissant cette attribution. L'opération d'affectation d'un terminal comprend l'association d'une configuration particulière de routage à un TPUI dudit terminal.

Dans cette même table, un nombre P d'identifiants ne sont pas affectés à une configuration de routage particulière ou sont en attentes de l'être, ils sont dits « libres ». Ils peuvent avoir une configuration de routage par défaut. L'ensemble des P identifiants peut être utilisé pour des terminaux libres. En d'autres termes un TPUI libre est un TPUI qui n'est pas associé à identifiant de contexte. En conséquence, un terminal ayant un TPUI libre utilisera une association de ligne définie par défaut dans la station de base BS.

En outre, lorsqu'un nouveau terminal est découvert par la station de base BS, par exemple lors d'une procédure d'appairage, un identifiant de terminal TPUI non attribué peut être utilisé. Si une configuration de routage est définie pour ce terminal, alors son TPUI sera affecté à cette configuration sinon il sera dans une configuration par défaut.

### Ré-indexation des TPUI

Le procédé de l'invention permet de réindexer la table des TPUI lorsqu'un évènement déclencheur est détecté par la base. L'opération de ré-indexation de la table comprend la modification d'un TPUI d'un terminal de sorte à réaffecter un nouveau contexte de routage au terminal en question. L'événement déclencheur comporte une donnée, nommé information de contexte, permettant d'affecter un nouveau TPUI au terminal.

Par exemple, lorsqu'un terminal est connecté à un nouveau socle, le socle transmet au terminal un identifiant unique qui permet de déterminer quel sera le nouveau TPUI du terminal.

Selon un autre exemple, lorsqu'un utilisateur entre un code PIN ou un code équivalent d'identification utilisateur, ce code permet de déterminer quel sera le nouveau TPUI du terminal.

Cette flexibilité permet un nouvel usage des terminaux mobiles au sein par exemple de bureaux. Les terminaux peuvent être inter-changés ou prêtés tout en respectant une configuration de routage propre à l'utilisateur du terminal.

Le procédé peut comprendre une unique ré-indexation d'un TPUI lorsqu'un unique évènement déclencheur est détecté ou une pluralité de ré-indexations lorsque différents évènements déclencheurs concomitants surviennent dans un même laps de temps.

Afin de réaliser le procédé de l'invention, la base de données de la station de base BS peut comprendre une seconde table indexant les identifiants de socle IDS à la table de routage. En outre, une troisième table indexant des codes utilisateurs IDU à la table de routage peut être mise en œuvre. L'une ou l'autre de ces tables permettent d'associer un identifiant de contexte à une configuration de routage particulière. Ainsi, le procédé de l'invention permet d'exploiter un nouvel ensemble d'identifiants dits de contexte IDC de sorte à reconnaitre à quelle configuration de routage est associée un terminal ayant changé de contexte, tel qu'un changement de lieu, un changement de socle ou encore un changement de fonction ou d'utilisateur.

### Etapes du procédé

La figure 3 représente les principales étapes du procédé de l'invention auquel a été préalablement représentée une étape d'appairage APPAIR d'un terminal T_{A}. Lors d'une procédure d'appairage d'un terminal T_{A}, la base attribue un identifiant TPUI libre audit terminal. Dans ce cas, une configuration de routage par défaut est affectée au terminal T_{A}.

L'étape d'appairage a été représentée car le procédé de l'invention permet avantageusement de tirer profit d'étapes normalement consécutives à une demande d'appairage mais qui sont exécutées ici dans le cadre d'une procédure de réaffectation d'un TPUI d'un terminal. Cette réaffectation a la particularité d'être automatiquement exécuté lorsqu'un évènement déclencheur prédéfini survient.

L'étape d'appairage peut également aboutir à attribuer un TPUI non libre ayant déjà une association avec une configuration de routage particulière.

Le procédé de ré-indexation de l'invention s'applique à un terminal ayant un TPUI ayant une affectation par défaut ou une affectation particulière. Lorsqu'un terminal n'a pas d'affectation, lors de sa première connexion à une station de base BS, une configuration de routage par défaut lui est associée.

Le procédé de l'invention comprend la détection d'un évènement déclencheur EVNT_D par la base. L'événement déclencheur est généré par une action effectuée sur le terminal T_{A}.

L'événement déclencheur détecté est interprété par la station de base comme une demande automatique de réaffectation d'un TPUI audit terminal. En effet, l'événement déclencheur permet d'assurer qu'un terminal soit utilisé dans un contexte donné lors de sa prochaine utilisation par un utilisateur.

Le procédé de l'invention comprend l'initialisation d'un changement d'affectation après la validation de la demande de réaffectation d'un TPUI du terminal T_{A}. La demande est analysée par la station de base BS en fonction d'un identifiant de contexte IDC déterminé au regard de l'information de contexte reçue. L'identifiant de contexte IDC peut être un code ou encore un identifiant de socle.

La station de base BS analyse alors si l'identifiant de contexte IDC est associé à un TPUI libre ou déjà attribué à un autre terminal. Cette analyse peut être effectuée à partir de la table d'identifiants de contexte, cette étape est notée CTRL_ID sur la figure 3.

Si le TPUI_1 associé à l'identifiant de contexte IDC est disponible, le TPUI_1 en question est automatiquement attribué au terminal T_{A} qui reçoit le nouvel identifiant de terminal TPUI_1. Dans ce cas, le terminal T_{A} est automatiquement associé à une configuration de routage prédéfinie pour l'identifiant de contexte IDC. Cette étape d'acquisition d'une configuration de routage est notée ACQ_CONF sur la figure 3. Cette étape est matérialisée par la réception et l'enregistrement du TPUI_1 au sein du terminal et par son ré-indexation dans la base de données de la station de base BS.

Si le TPUI_1 associé à l'identifiant de contexte est indisponible, la station de base BS envoi une demande ASK_ID destinée au terminal T_{B} ayant le TPUI indisponible qui lui a déjà été attribué.

Le terminal T_{B} possédant le TPUI_1 désiré le libère alors en basculant sur un identifiant TPUI libre. Cette libération peut s'effectuer selon deux processus selon si le terminal T_{B} est accessible ou non par la station de base.

Lorsque la station de base BS contacte le terminal T_{B}, par exemple au moyen d'une requête, une temporisation TEMP_2 est amorcée permettant de définir une fenêtre temporelle dans laquelle la réponse du terminal T_{B} sera reçue ou non.

Lorsque le terminal T_{B} ne répond pas dans la fenêtre de temps impartie TEMP_2, étape NO_REP sur la figure 3, il est alors considéré comme hors de portée de la station de base BS et le terminal T_{A} se voit attribuer l'identifiant souhaité. Lors de la prochaine connexion du terminal TB, il devra demander une nouvelle attribution de TPUI à la station de base.

Lorsque le terminal T_{B} est « vu » de la station de base, c'est-à-dire qu'il est en mesure de répondre à une requête de la station de base, alors le procédé de l'invention comprend la génération d'une réponse ACC_ASK permettant d'aboutir à :
▪ l'acceptation de la demande d'un nouveau TPUI pour le terminal T_{A}, l'attribution du nouveau TPUI_1 et à l'affectation de la nouvelle configuration de routage particulière ACQ_CONF et ;
▪ la demande d'un nouveau TPUI pour le terminal T_{B} soit par un nouveau processus d'appairage soit par attribution d'un nouvel identifiant de terminal libre.

Le procédé attribue le TPUI_1 désiré au terminal T_{A} qui hérite de la configuration de routage particulière qui était précédemment celle du terminal T_{B} et qui est nouvellement réaffectée au terminal T_{A}. Le Terminal T_{B} obtient alors un identifiant TPUI libre et une configuration de routage par défaut associée à ce nouveau TPUI.

### Modes de réalisation avec temporisation ou non

Les figures 4A et 4B représentent deux variantes de mise en œuvre du procédé de l'invention. Dans une première variante, représentée à la figure 4A, le procédé de ré-indexation est engagé, par exemple, à l'initiative du terminal T_{A}. Dans la seconde variante, représenté à la figure 4B, le procédé de ré-indexation est engagé, par exemple, à l'initiative de la station de base BS. Cependant dans tous les cas de figures, une requête est émise par le terminal vers la base, la requête émanant d'une action d'un utilisateur ou étant automatiquement générée.

Dans la figure 4A, le terminal T_{A} émet une requête LOC_REQ à la station de base BS consécutivement à la survenance d'un évènement déclencheur. La requête LOC_REQ comprend des données informant du changement de contexte ou directement l'identifiant du terminal TPUI souhaité. Selon un mode de réalisation, la requête LOC_REQ comprend une requête simple « LOCATE_REQUEST » indiquant la signalisation de la requête et un message dédié « IWU_TO_IWU » comportant les informations de contexte ou directement le TPUI demandé. Les données informant du changement de contexte peuvent comprendre un identifiant de contexte lorsqu'il est connu du terminal ou une information relative à un changement de contexte qui sera analysée par la station de base BS pour déterminer l'identifiant de contexte relatif à cette information de contexte. Par exemple, lorsque l'information de contexte est un identifiant d'un socle non associé au terminal auquel il vient d'être connecté ou auquel il est connecté, l'identifiant de contexte peut correspondre à un identifiant utilisateur ayant reçu le socle. En outre, il peut s'agir d'un code entré par un utilisateur comme cela a été précédemment décrit ou encore une combinaison d'un contexte privé et d'un contexte public.

La station de base BS, à réception de la requête émise par le terminal, vérifie si le TPUI souhaité ou le TPUI associé à l'information de contexte est disponible ou non. Si le TPUI est disponible, la station de base BS émet une réponse notée LOC_ACC. La réponse comprend alors le nouvel identifiant TPUI, le terminal met alors à jour son identifiant de terminal et le sauvegarde dans une mémoire de ce dernier.

Selon un mode de réalisation, la station de base BS émet une réponse de refus LOC_REJ au terminal T_{A} comportant une temporisation TEMP_1 invitant le terminal T_{A} à réémettre sa requête ultérieurement après l'écoulement d'une période de temps prédéfini.

Cette temporisation permet par exemple de vérifier la disponibilité du TPUI. En outre, la temporisation permet, lorsque le TPUI est déjà attribué à un autre terminal, de modifier l'attribution du TPUI du terminal ayant déjà le TPUI souhaité pour le rendre disponible. Le terminal T_{A}, à réception de cette réponse, réémettra sa requête à l'issue d'une première période donnée. Selon un mode de réalisation, la première période donnée est indiquée dans le message de réponse LOC_REJ de la station de base BS vers le terminal T_{A}. Selon un autre mode de réalisation, la première période donnée est prédéfinie dans chaque terminal.

Après avoir identifié l'identifiant de contexte relatif à la demande du terminal T_{A}, la station de base BS est capable de déterminer l'identifiant de terminal TPUI étant associé à cet identifiant de contexte. La précédente temporisation permet à la station de base BS d'émettre une requête de modification du TPUI au terminal dont le TPUI est souhaité. Ce terminal est noté T_{B} sur la figure 4A et la requête de modification du TPUI au terminal T_{B} est notée TEMP_ID_ASSI sur la figure 4A ainsi que sur la figure 4B.

Si la station de base BS ne reçoit aucune réponse du terminal T_{B} pendant un laps de temps prédéfini TEMP_2 correspondant à une seconde période de temps maximale, le terminal T_{B} est considéré par la station de base BS comme étant hors de portée ou éteint. Le TPUI du terminal T_{B} est alors attribué au terminal T_{A} dans la réponse LOC_ACC émise par la station de base BS après l'écoulement de la première période donnée TEMP_1. Le terminal T_{B}, lors de la prochaine connexion à la station de base BS, rééditera une procédure d'appairage pour obtenir un nouveau TPUI selon son contexte.

Si la station de base reçoit une réponse du terminal T_{B} par le message TEMP_ID_ASSI_ACK de la figure 4A dans le laps de temps TEMP_2, alors la station de base BS réaffecte le TPUI du terminal T_{B} au terminal T_{A} et réattribuera un TPUI libre au terminal T_{B}, c'est-à-dire un TPUI non associé à un identifiant de contexte.

La première période TEMP_1 est configurée pour être plus longue que la seconde durée TEMP_2 de sorte que la station de base BS obtienne une réponse du terminal T_{B} avant la fin de la première période TEMP_1. Selon un exemple de réalisation, la première TEMP_1 et la seconde TEMP_2 durées peuvent être définies entre quelques millisecondes et quelques secondes.

La figure 4B représente un second mode de réalisation dans lequel le procédé de l'invention est engagé à l'initiative de la station de base BS, le terminal n'étant alors pas soumis à une temporisation pour réémettre sa requête de modification NOTIF_AFFECT. Selon ce mode de réalisation, le procédé de ré-indexation est plus rapide que le procédé de la figure 4A.

Dans ce mode de réalisation, les messages échangés entre le terminal T_{A} et la base ne comportent pas de temporisation. Un message NOTIF_AFFECT émis par le terminal T_{A} et comprenant la demande de changement de TPUI et l'information de contexte est reçue par la station de base BS. A réception de la requête du terminal TA, la station de base BS vérifie la disponibilité du TPUI associé à l'information de contexte transmise par le terminal T_{A}. Si le TPUI associé est libre, il est transmis par le message TEMP_ID_ASSI. Le terminal est alors en mesure de modifier son TPUI en l'enregistrant dans une mémoire. Le terminal TA réémet une requête de confirmation de la modification notée TEMP_ID_ASSI_ACK informant le serveur de la prise en compte de la nouvelle attribution.

Lorsque le TPUI associé à l'information de contexte n'est pas disponible, la station de base BS adresse un message au terminal occupant l'adressage du TPUI dans l'objectif de lui attribuer un nouvel identifiant de terminal libre de sorte à attribuer le TPUI associé à l'information de contexte au terminal TA.

### Avantages

Un premier avantage du procédé de ré-indexation de l'invention est de permettre à un ensemble d'utilisateurs d'un parc de terminaux d'échanger les terminaux rattachés à une même station de base de manière à éviter les pertes de terminaux et afin d'éviter les réaffectations de ces derniers auprès de la station de base nécessitant l'intervention d'un technicien.

L'invention permet ainsi une reconfiguration des affectations des terminaux flexibles et permettant un fonctionnement ad hoc au sein d'un ensemble d'utilisateurs.

L'invention permet, en outre, une gestion simplifiée des terminaux en dématérialisant les affectations de chaque utilisateur à un équipement donné.

Un autre avantage est de permettre une reconfiguration dynamique entièrement gérée par des échanges de messages entre les terminaux et la station de base.

Enfin, un avantage est de permettre une adaptabilité aux protocoles d'échanges de données entre terminaux et la station de base déjà mis en place par les normes, notamment les normes relatives au DECT.

L'invention permet de sécuriser les affectations dynamiques de terminaux étant compatibles de la prise en compte de mot de passe dans l'identification de contexte engagement un changement d'affectation de terminal.

## Revendications

1. Procédé de ré-indexation dans une station de base (BS) d'au moins un premier terminal mobile (T_{A}) devant être associé à une nouvelle configuration de routage prédéfinie, la station de base (BS) répertoriant un premier ensemble d'identifiants (TPUI) de terminaux mobiles (Tₖ) et un ensemble d'identifiants de contextes (IDC), chaque identifiant de contexte (IDC) étant associé à une affectation de lignes correspondante à une configuration de routage de communications entrantes et sortantes, ledit procédé étant **caractérisé en ce qu'**il comprend :
▪ Une détection d'une demande de changement d'identifiant de terminal (TPUI) émise par le premier terminal (T_{A}), ladite demande comprenant une information correspondante à un identifiant de contexte (IDC_1) répertorié dans la station de base (BS) ;
▪ Une vérification de la disponibilité d'un nouvel l'identifiant de terminal (TPUI_1) associé à l'identifiant de contexte (IDC_1), ledit identifiant de contexte (IDC_1) étant déterminé par l'analyse de l'information de contexte comprise dans la demande ;
▪ Une attribution d'un nouvel identifiant de terminal (TPUI_1) audit premier terminal (T_{A}) comprenant ;
∘ Une transmission du nouvel identifiant de terminal (TPUI_1) audit premier terminal (T_{A}) ;
∘ Une modification de l'indexation du nouvel identifiant (TPUI_1) du terminal (T_{A}) stocké dans la station de base.

2. Procédé de ré-indexation selon la revendication 1, **caractérisé en ce qu'**il comprend préalablement:
▪ Une génération d'un évènement déclencheur (EVNT_D) entrainant l'émission par le premier terminal (T_{A}) d'une demande de changement d'identifiant d'un terminal (TPUI) auprès de la station de base (BS), l'évènement déclencheur (EVNT_D) étant causé par la détection d'une modification de contexte du premier terminal (T_{A}).

3. Procédé de ré-indexation selon l'une quelconque des revendications 1 à 2, **caractérisé en ce que** la base comporte une mémoire dans laquelle sont stockées un ensemble de configurations de routages particulières et au moins une configuration de routage par défaut.

4. Procédé de ré-indexation selon la revendication 3, **caractérisé en ce qu'**il comprend lorsque l'étape de vérification de disponibilité d'un nouvel identifiant de terminal (TPUI) échoue, une étape de :
▪ Génération d'une requête de modification de l'identification de terminal (TPUI) à destination d'un second terminal (T₂) comportant l'identification de terminal (TPUI_1) correspondant à l'identification de contexte souhaitée (IDC) ;
▪ Attribution d'un second identifiant de terminal (TPUI_2) au second terminal (T₂), ledit second identifiant de terminal (TPUI_2) étant affectée à une configuration de routage par défaut.

5. Procédé de ré-indexation selon la revendication 4, **caractérisé en ce qu'**il comprend une émission d'un message par la station de base (BS) au premier terminal (T_{A}) l'invitant à réémettre une nouvelle demande de changement d'identifiant de terminal (TPUI) après l'écoulement d'un premier laps de temps (TEMP_1).

6. Procédé de ré-indexation selon la revendication 3, **caractérisé en ce qu'**il comprend lorsque l'étape de vérification de disponibilité d'un nouvel identifiant de terminal (TPUI) échoue, une étape de :
▪ Génération d'une requête de modification de l'identification de terminal (TPUI) à destination d'un second terminal (T₂) comportant l'identification de terminal (TPUI_1) correspondant à l'identification de contexte souhaitée (IDC) ;
▪ Déclenchement d'une seconde temporisation (TEMP_2) pendant laquelle une réponse du second terminal (T_{B}) est attendue par la station de base (BS) ;
▪ Suppression de l'identification de terminal (TPUI) d'un second terminal (T₂) comportant l'identification de terminal (TPUI_1) correspondant à l'identification de contexte souhaitée (IDC) dans une table d'indexation de la station de base (BS) après l'écoulement de la seconde temporisation (TEMP_2).

7. Procédé de ré-indexation selon l'une quelconque des revendications 2 à 6, **caractérisé en ce que** l'information de contexte est l'un parmi la liste des informations suivantes :
▪ Un identifiant de socle, lorsque l'évènement déclencheur correspond à une connexion du premier terminal sur un autre socle que le socle auquel il a été initialement associé ;
▪ Un identifiant d'utilisateur ou un code associé à un compte utilisateur, lorsque l'évènement déclencheur est la saisie d'un code sur une interface du premier terminal ou la reconnaissance d'une empreinte ;
▪ Un identifiant de localisation, lorsque l'évènement déclencheur est une association du premier terminal à un lieu prédéfini et connu de la station de base (BS).

8. Produit programme d'ordinateur comportant un calculateur et une mémoire comprenant des instructions qui, lorsque le programme est exécuté par ordinateur, conduisent celui-ci à mettre en œuvre les étapes du procédé de l'une quelconque des revendications précédentes.

9. Support d'enregistrement lisible par ordinateur, sur lequel est enregistré le produit programme d'ordinateur selon la revendication 8.

10. Station de base **caractérisée en ce qu'**elle comprend des moyens de calculs des interfaces de communications permettant de recevoir et émettre des appels entrant, une interface radio permettant d'émettre et recevoir des messages à une flotte de terminaux référencés dans une mémoire, ladite mémoire stockant des données référençant:
▪ des identifiants de terminaux mobiles (TPUI) associés à des identifiants de contextes (Ci) ;
▪ des identifiants de lignes (Li) permettant de définir des configurations de routage lorsqu'ils sont associés à des terminaux, ladite station de base (BS) comprenant une table de configurations de routage des appels entrants et sortants associant chaque identifiant de contexte (Ci) avec une configuration de routage prédéfinie, la station de base (BS) comprenant, en outre, une fonction permettant de détecter une demande de changement d'identifiant de terminal (TPUI) en provenance d'un terminal (T_{A}), une détermination d'une information de contexte comprise dans ladite demande permettant d'identifier un nouvel identifiant de terminal (TPUI_1) associé à un identifiant de contexte correspondant à l'information extraite du message reçu, et une attribution du nouvel identifiant de terminal audit terminal ayant effectué la demande de changement.

11. Terminal (T_{A}) comprenant une adresse physique immuable et une interface permettant de déterminer un élément de contexte relatif à une nouvelle utilisation dudit terminal (T_{A}), des moyens de calculs permettant de générer un message à destination d'une station de base (BS) émis par voie radio, ledit message étant **caractérisé en ce qu'**il comprend :
▪ une information identifiant l'élément de contexte précédemment déterminé et ;
▪ une demande d'attribution d'un nouvel identifiant de terminal (TPUI) à associer à son adresse physique immuable,
ledit terminal étant capable consécutivement à la transmission du message de recevoir un nouvel identifiant de terminal (TPUI_1) et de modifier dans sa mémoire son précédent identifiant de terminal (TPUI) par un nouvel identifiant de terminal (TPUI_1) reçu de la station de base.

## Patentansprüche

1. Re-Indexierungsverfahren in einer Basisstation (BS) wenigstens eines ersten mobilen Terminals (TA), das einer neuen vordefinierten RoutingKonfiguration zugeordnet werden soll, wobei die Basisstation (BS) eine erste Gruppe von Kennungen (TPUI) von mobilen Terminals (T_{K}) und eine Gruppe von Kontextkennungen (IDC) in einem Verzeichnis erfassen, wobei jede Kontextkennung (IDC) einer Linienzuordnung zugeordnet ist, die einer Routingkonfiguration eingehender und ausgehender Kommunikationen entspricht, wobei das genannte Verfahren **dadurch gekennzeichnet ist, dass** es umfasst:
▪ ein Erkennen einer Änderungsanfrage einer Terminalkennung (TPUI), die von dem ersten Terminal (T_{A}) ausgegeben wird, wobei die genannte Anfrage eine Information umfasst, die einer Kontextkennung (IDC_1) entspricht, die in der Basisstation (BS) verzeichnet ist;
▪ eine Überprüfung der Verfügbarkeit einer neuen Terminalkennung (TPUI_1), das der Kontextkennung (IDC_1) zugeordnet ist, wobei die genannte Kontextkennung (IDC_1) durch die Analyse der Kontextinformation bestimmt wird, die in der Anfrage inbegriffen ist;
▪ eine Zuordnung einer neuen Terminalkennung (TPUI_1) zu dem genannten ersten Terminal (T_{A}), umfassend:
∘ eine Übertragung der neuen Terminalkennung (TPUI_1) auf das genannte erste Terminal (T_{A});
∘ eine Änderung der Indexierung der neuen Kennung (TPUI_1) des in der Basisstation gespeicherten Terminals (T_{A}).

2. Re-Indexierungsverfahren gemäß Anspruch 1, **dadurch gekennzeichnet, dass** es vorab umfasst:
▪ ein Erzeugen eines auslösenden Ereignisses (EVNT_D), das die Ausgabe einer Änderungsanfrage der Kennung eines Terminals (TPUI) bei der Basisstation (BS) durch das erste Terminal (T_{A}) nach sich zieht, wobei das auslösende Ereignis (EVNT_D) durch das Detektieren einer Kontextänderung des ersten Terminals (T_{A}) verursacht wird.

3. Re-Indexierungsverfahren gemäß irgendeinem der Ansprüche 1 bis 2, **dadurch gekennzeichnet, dass** die Basis einen Speicher umfasst, in dem eine Gruppe von besonderen Routingkonfigurationen und wenigstens eine voreingestellte Routingkonfiguration gespeichert sind.

4. Re-Indexierungsverfahren gemäß Anspruch 3, **dadurch gekennzeichnet, dass** es, wenn der Überprüfungsschritt der Verfügbarkeit einer neuen Terminalidentität (TPUI) fehlschlägt, einen Schritt umfasst:
▪ zum Erzeugen einer Änderungsanfrage der Terminalidentifizierung (TPUI), die an ein zweites Terminal (T2) gerichtet ist, umfassend die Terminalidentifizierung (TPUI_1), die der gewünschten Kontextidentifizierung (IDC) entspricht;
▪ zum Zuordnen einer zweiten Terminalkennung (TPUI_2) zum zweiten Terminal (T₂), wobei die genannte zweite Terminalkennung (TPUI_2) einer voreingestellten Routingkonfiguration zugeordnet wird.

5. Re-Indexierungsverfahren gemäß Anspruch 4, **dadurch gekennzeichnet, dass** es eine Ausgabe einer Meldung per Basisstation (BS) an das erste Terminal (TA) umfasst, die es zum erneuten Senden einer neuen Änderungsanfrage der Terminalkennung (TPUI) nach dem Ablauf eines ersten Zeitraums (TEMP_1) auffordert.

6. Re-Indexierungsverfahren gemäß Anspruch 3, **dadurch gekennzeichnet, dass** es, wenn der Überprüfungsschritt der Verfügbarkeit einer neuen Terminalkennung (TPUI) fehlschlägt, einen Schritt umfasst:
▪ zum Erzeugen einer Änderungsanfrage der Terminalidentifizierung (TPUI), die an ein zweites Terminal (T₂) gerichtet wird, umfassend die Terminalidentifizierung (TPUI_1), die der gewünschten Kontextidentifizierung (IDC) entspricht;
▪ zum Auslösen einer zweiten Verzögerung (TEMP_2), während derer eine Antwort des zweiten Terminals (T_{B}) von der Basisstation (BS) erwartet wird;
▪ Löschen der Terminalidentifizierung (TPUI) eines zweiten Terminals (T₂), umfassend die Terminalidentifizierung (TPUI_1), die der gewünschten Kontextidentifizierung (IDC) in einer Indexierungstabelle der Basisstation (BS) nach dem Ablauf der zweiten Verzögerung (TEMP_2) entspricht.

7. Re-Indexierungsverfahren gemäß irgendeinem der Ansprüche 2 bis 6, **dadurch gekennzeichnet, dass** die Kontextinformation eines aus der Liste der folgenden Informationen ist:
▪ eine Sockelkennung, wenn das auslösende Ereignis einem Anschluss des ersten Terminals auf einem anderen Sockel als dem Sockel entspricht, dem es ursprünglich zugeordnet wurde;
▪ eine Nutzerkennung oder einen Code, der einem Nutzerkonto zugeordnet ist, wenn das auslösende Ereignis das Eingeben eines Codes auf einer Schnittstelle des ersten Terminals oder das Erkennen eines Abdrucks ist;
▪ eine Lokalisierungskennung, wenn das auslösende Ereignis eine Zuordnung des ersten Terminals zu einem vorbestimmten und der Basisstation (BS) bekannten Ort ist.

8. Computerprogramm-Produkt, umfassend einen Rechner und einen Speicher, umfassend Anweisungen, die, wenn das Programm vom Computer ausgeführt wird, diesen dazu veranlassen, die Schritte des Verfahrens gemäß irgendeinem der voranstehenden Ansprüche umzusetzen.

9. Von einem Computer lesbarer Speicherträger, auf dem das Computerprogramm-Produkt gemäß Anspruch 8 gespeichert ist.

10. Basisstation, **dadurch gekennzeichnet, dass** sie Berechnungsmittel der Kommunikationsschnittstellen umfasst, die das Empfangen und Senden der eingehenden Anrufe ermöglichen, wobei eine Funkschnittstelle das Senden und Empfangen der Meldungen an eine Flotte von in einem Speicher referenzierten Terminals ermöglicht, wobei der genannte Speicher Daten speichert, die referenzieren:
▪ Kennungen von mobilen Terminals (TPUI), die Kontextkennungen zugeordnet sind (Ci);
▪ Kennungen von Linien (Li), die das Definieren der Routingkonfigurationen zulassen, wenn sie Terminals zugeordnet sind, wobei die genannte Basisstation (BS) eine Tabelle der Routingkonfigurationen der eingehenden und ausgehenden Anrufe umfasst, die jede Kontextkennung (Ci) mit einer vordefinierten Routingkonfiguration zuordnet, wobei die Basisstation (BS) darüber hinaus eine Funktion zum Detektieren einer Änderungsanfrage einer Terminalkennung (TPUI) von einem Terminal (T_{A}) umfasst, wobei eine Bestimmung einer Kontextinformation, die in der genannten Anfrage inbegriffen ist, das Identifizieren einer neuen Terminalkennung (TPUI_1) zulässt, die einer Kontextkennung zugeordnet ist, die einer Information entspricht, die aus der empfangenen Nachricht extrahiert ist, und eine Zuordnung der neuen Terminalkennung zu dem genannten Terminal, das die Änderungsanfrage gestellt hat.

11. Terminal (T_{A}), umfassend eine unveränderliche physische Adresse und eine Schnittstelle, die das Bestimmen eines Kontextelements in Bezug auf eine neue Verwendung des genannten Terminals (TA) zulässt, wobei Berechnungsmittel das Erzeugen einer an eine Basisstation (BS) gerichteten Meldung, die auf dem Funkweg ausgegeben wird, ermöglichen, wobei die genannte Meldung **dadurch gekennzeichnet ist, dass** sie umfasst:
▪ eine Information, die das zuvor bestimmte Kontextelement identifiziert, und;
▪ eine Zuordnungsanfrage einer neuen Terminalkennung (TPUI), die ihrer unveränderlichen physischen Adresse zuzuordnen ist;
wobei das genannte Terminal im Anschluss an die Übertragung der Meldung zum Empfangen einer neuen Terminalkennung (TPUI_1) und zum Ändern seiner vorherigen Terminalkennung (TPUJI) in seinem Speicher durch eine neue Terminalkennung (TPUI_1) in der Lage ist, die von der Basisstation empfangen wird.

## Claims

1. Method of re-indexing in a base station (BS) at least one first mobile terminal (T_{A}) having to be associated with a new predefined routing configuration, the base station (BS) cataloguing a first set of identifiers (TPUI) of mobile terminals (Tₖ) and a set of context identifiers (IDC), each context identifier (IDC) being associated with an assignment of lines which corresponds to a configuration for routing incoming and outgoing communications, said method being **characterised in that** it comprises:
• A detection of a request for change of terminal identifier (TPUI) emitted by the first terminal (T_{A}), said request comprising information that corresponds to a context identifier (IDC_1) catalogued in the base station (BS);
• A verification of the availability of a new terminal identifier (TPUI_1) associated with the context identifier (IDC_1), said context identifier (IDC_1) being determined by the analysis of the context information comprised in the request;
• An allotting of a new terminal identifier (TPUI_1) to said first terminal (TA) comprising;
∘ A transmission of the new terminal identifier (TPUI_1) to said first terminal (TA);
∘ A modification of the indexation of the new identifier (TPUI_1) of the terminal (T_{A}) stored in the base station.

2. Method of re-indexing according to claim 1, **characterised in that** it comprises beforehand:
• A generating of a trigger event (EVNT_D) resulting in the emission by the first terminal (T_{A}) of a request for change of terminal identifier (TPUI) with the base station (BS), with the trigger event (EVNT_D) being caused by the detecting of a modification in the context of the first terminal (TA).

3. Method of re-indexing according to any of claims 1 to 2, **characterised in that** the base comprises a memory in which a set of particular routing configurations and at least one default routing configuration are stored.

4. Method of re-indexing according to claim 3, **characterised in that** it comprises when the step of verifying the availability of a new terminal identifier (TPUI) fails, a step of:
• Generating a request for modification of the terminal identification (TPUI) intended for a second terminal (T₂) comprising the terminal identification (TPUI_1) that corresponds to the desired context identification (IDC);
• Allocating a second terminal identifier (TPUI_2) to the second terminal (T₂), said second terminal identifier (TPUI_2) being allocated to a default routing configuration.

5. Method of re-indexing according to claim 4, **characterised in that** it comprises an emission of a message by the base station (BS) to the first terminal (T_{A}) inviting it to reemit another request for modification of the terminal identifier (TPUI) after a first period of time has elapsed (TEMP_1).

6. Method of re-indexing according to claim 3, **characterised in that** it comprises when the step of verifying the availability of a new terminal identifier (TPUI) fails, a step of:
• Generating a request for modification of the terminal identification (TPUI) intended for a second terminal (T₂) comprising the terminal identification (TPUI_1) that corresponds to the desired context identification (IDC);
• Triggering a second time delay (TEMP_2) during which a response from the second terminal (T_{B}) is expected by the base station (BS);
• Suppression of the terminal identification (TPUI) of a second terminal (T₂) comprising the terminal identification (TPUI_1) that corresponds to the desired context identification (IDC) in an indexing table of the base station (BS) after the second time delay has elapsed (TEMP_2).

7. Method of re-indexing according to any of claims 2 to 6, **characterised in that** the context information is one from the following list of information:
• A base identifier, when the trigger event corresponds to a connection of the first terminal on a base other than the base with which it was initially associated;
• A user identifier or a code associated with a user account, when the trigger event is the key-entry of a code on an interface of the first terminal or the recognition of a fingerprint;
• A location identifier, when the trigger event is an association of the first terminal with a predefined location and known to the base station (BS).

8. Computer program product comprising a calculator and a memory comprising instructions that, when the program is executed by a computer, leads the latter to implement the steps of the method according to any preceding claim.

9. Recordable support that can be read by a computer, whereon is recorded the computer program product according to claim 8.

10. Base station **characterised in that** it comprises means of calculation of the communications interfaces making it possible to receive and emit incoming calls, a radio interface making it possible to emit and receive messages to a fleet of terminals referenced in a memory, said memory storing data referencing:
• identifiers of mobile terminals (TPUI) associated with context identifiers (Ci);
• line identifiers (Li) making it possible to define routing configurations when they are associated with terminals, said base station (BS) comprising a table of configurations for routing incoming and outgoing calls associating each context identifier (Ci) with a predefined routing configuration, the base station (BS) further comprising a function that makes it possible to detect a request for change of a terminal identifier (TPUI) coming from a terminal (T_{A}), a determining of context information comprised in said request making it possible to identify a new terminal identifier (TPUI_1) associated with a context identifier that corresponds to the information extracted from the message received, and an allocation of the new terminal identifier to said terminal that carried out the request for change.

11. Terminal (T_{A}) comprising an unchanging physical address and an interface making it possible to determine a context element relating to a new use of said terminal (T_{A}), means for calculation making it possible to generate a message intended for a base station (BS) emitted by radio, said message **characterised in that** it comprises:
• information identifying the previously determined context element and;
• a request for allocation of a new terminal identifier (TPUI) to be associated with its unchanging physical address,
said terminal being able consecutively to the transmission of the message to receive a new terminal identifier (TPUI_1) and to modify in its memory its previous terminal identifier (TPUI) with a new terminal identifier (TPUI_1) received from the base station.
